# EUROPEAN PATENT APPLICATION

(11) **EP 2 724 779 A1**
(43) Date of publication of application: **30.04.2014**
(21) Application number: 12190399.1
(22) Date of filing: 29.10.2012
(51) Int. Cl.: B02C 4/00, B02C 4/28, G01B 11/25

(54) **Monitoring device for a roller crusher**

(71) Applicant: Metso Minerals Industries, Inc., Waukesha, WI 53186 (US)
(72) Inventor: Webster, Alexander, Waukesha, WI Wisconsin 53186 (US)
(74) Representative: Winblad, Christian

(57) **Abstract**

The invention relates to a monitoring device (3) for monitoring a surface of a roll (1) of a roller crusher. The monitoring device (3) comprises a light emitter (4) arranged to project a line (5) on the surface of the roll (1), an image capturing device (6) arranged to capture an image of a portion of the surface, the portion including at least a part of the projected line (5), and a processor unit (7) arranged to process the image to determine information about the surface. The invention also relates to a high pressure roller crusher, a sizer, a use of a monitoring device (3), a method for monitoring a surface of a roll of a roller crusher, and a computer program.

## Description

### Technical field

The invention relates to a monitoring device for monitoring a surface of a roll of a roller crusher. The invention also relates to a high pressure roller crusher, a sizer, use of a monitoring device, a method for monitoring a surface of a roll of a roller crusher, and a computer program.

### Background art

When crushing or grinding rock, ore, cement clinker and other hard materials, roller crushers may be used having two generally parallel rolls which rotate in opposite directions, towards each other, and which are separated by a gap. The material to be crushed is fed by gravity or choke-fed into the gap. One type of roller crusher is called high pressure grinding rollers or high pressure roller crushers. This type of roller crusher uses a crushing technique called interparticle crushing. Here, the material to be crushed or pulverized is crushed, not only by the crushing surface of the rolls, but also by particles in the material to be crushed, hence the name interparticle crushing. An advantage of interparticle crushing is that an effective crushing may be achieved, even to very small grain sizes, with a reduced energy consumption as compared to many other crushing techniques.

During the crushing or pulverising process, the outer surfaces of the rolls are subjected to extraordinarily high stressing from which, among other things, high wear emerges. It has been known to counter this wear by means of different shaping and coating of the roll surfaces exposed to the wear. One common measure is to provide the outer surfaces of the rolls with pins which are more wear-resistant and suitable for producing and maintaining an autogenous wear protecting surface. However, due to the enormous amount of stress applied on the rollers, even the wear resistant pins inserted into the surface regions are eventually worn down, defect, or might even fall off and need to be replaced. In view thereof, the rolls need to be monitored in order to determine if and when a wear resistant pin needs to be replaced.

EP 509 809 discloses a method for monitoring the wear undergone by a round cylindrical surface of a crusher or grinder roll. In the method, the circumference of the roll is scanned at various positions along the length of the roll to obtain actual values for the distance of the roll surface from a datum. These actual values are compared with corresponding, predetermined distance values to determine any variance between the actual distance values and the predetermined distance values.

A problem with the method above is that an apparatus having a vast number of parts is required in order for it to be applicable. In addition thereto, some of the parts must be movable. This makes the apparatus used expensive and the method complicated.

### Summary of the invention

It is an object of the present invention to provide an improvement of the above technique and prior art. More particularly, it is an object of the present invention to provide a monitoring device for monitoring a surface of a roll of a roller crusher which is economical and less complicated than prior art. Further, it is an object of the present invention to provide a high pressure roller crusher, a sizer or similar device, use of a monitoring device, a method for monitoring a surface of a roll of a roller crusher, and a computer program.

These and other objects as well as advantages that will be apparent from the following description of the present invention are achieved by a monitoring device for monitoring a surface of a roll of a roller crusher according to the independent claim.

According to a first aspect, these and other objects are achieved, in full or at least in part, by a monitoring device for monitoring a surface of a roll of a roller crusher. The monitoring device comprises a light emitter arranged to project a line on the surface of the roll, an image capturing device arranged to capture an image of a portion of the surface, the portion including at least a part of the projected line, and a processor unit arranged to process the image to determine information about the surface. The monitoring device includes a restricted amount of parts and is therefore less complicated and expensive than other monitoring devices on the market today. It is further an advantage in relation to prior art that an image of the roll surface together with at least a part of the projected line is captured. The image can be used not only to determine a distance between a point on the roll surface and a reference point, but also to determine a brightness of a point on the roll surface, a colour of a point on the roll surface, or even a temperature of a point on the roll surface. In turn, the information about the surface may, for example, be used to detect defect or missing wear resistant pins, detect defect or missing edge blocks and/or detect defect or missing flanges. The information about the surface may be also used to yield a surface profile to help determine wear. The surface profile includes both the roll surface and any pins provided in the roll surface.

The light emitter may be a laser and the image capturing device may be a camera sensor. This is a preferred embodiment of the present invention. The laser and the camera sensor are accurate and simple to use.

The image capturing device may be arranged to capture images of the roll, while the roll is rotating, the image capturing device being arranged to capture a plurality of images of the surface during one revolution of the roll. This way, an overview of the entire roll surface may be established while the roller crusher is still in use.

The monitoring device may further comprise a rotation detector arranged to detect a rotational position of the roll. When the rotational detector has detected the rotational position of the roll, the processing unit may be arranged to associate the detected rotational position with an image captured by the image capturing device. Thus, an exact portion of the roll surface can be pointed out in the image and used in the determining of information about the surface.

The monitoring device may further comprise a memory for storing a predetermined representation of the roll surface. The predetermined representation illustrates the roll surface when in an idle working condition. At this time no wear of the roller surface has been established. The predetermined representation may, for example, illustrate the roll surface when the roll is completely new, when the roll has been reconditioned, or when the roll has been used for a shorter period after being completely new or reconditioned.

The processing unit may be arranged to store a plurality of captured images of the roll surface, captured at different rotational positions of the roll, and to form a current representation of the roll surface using the captured images. By using the current representation, the current working condition of the roll surface may be established. The representation, both the predetermined and the current, may be an overview of the entire roll surface which is established by using a plurality of images taken by the image capturing device.

The processing unit may be arranged to compare the current representation of the roll surface with the predetermined representation of the roll surface. By comparing the current representation of the roll surface with the predetermined representation of the roll surface, it may be established if there is a need for reconditioning of the roll surface or parts thereof. For example, a missing stud or a worn down or damaged stud that needs replacement may be detected by comparing the calculated characteristics extracted from the images over time. A vast number of different parameters may be used in order to compare the image illustrating the predetermined representation of the roll surface and the image illustrating the current representation of the roll surface. Such parameters may for example be constituted by a distance, a brightness, a colour or a temperature. Therefore, the processing unit may be arranged to determine at least one from the group consisting of an offset of a first point on the roll surface from a reference point, a brightness of a first point on the roll surface, a colour of a first point on the roll surface, and a temperature of a point on the roll surface. The offset of the first point from the reference point may be a height of that first point above a level of the surrounding roll surface. The reference point will generally be a point in the image corresponding to the level of the surrounding roll surface. Thus, when the roll is completely new and unused, the reference point may be a point on the surface of the roll body, whereas when the roll has been used, and an autogenous layer has formed on the surface of the roll body, between the pins, the reference point may be a point on the surface of the autogenous layer.

According to a second aspect of the invention, a high pressure roller crusher is provided. The high pressure roller crusher comprises two rolls, and at least one monitoring device according to the features above.

According to a third aspect of the invention, a sizer is provided. The sizer comprises two rolls, and at least one monitoring device according to the features above. Each roll comprises a plurality of teeth which, during use, will pass through the corresponding teeth of the opposite roll of the sizer.

According to a fourth aspect of the invention, the use of a monitoring device according to the features above, for determining wear of a surface of a roll of a roller crusher, is provided. The monitoring device may also be used in order to determine an absence of a wear body at a location on a surface of a roll of a roller crusher in which a presence of a wear body is intended.

According to a fifth aspect of the invention, a method for monitoring a surface of a roll of a roller crusher is provided. The method comprises the steps of projecting a line of light on the surface of the roll, capturing an image of a portion of the surface, the portion including at least a part of the projected line, processing the image to determine information about the surface. The method only contains a few steps and is economical and simple. A further advantage with the method is that an image of the roll surface together with at least a part of the projected line is captured. The image can be used not only to determine a distance between a point on the roll surface and a reference point, but also to determine a brightness of a point on the roll surface, a colour of a point on the roll surface, or even a temperature of a point on the roll surface. In turn, the information may be used in order to determine information about the roll surface, such as if a wear resistant pin is worn down, have other defects or is missing and thus needs replacement.

The step of capturing an image of a portion of the roll surface may be repeated several times, while the roll is rotating, in order to capture a plurality of images of the roll surface during one revolution of the roll. This way, an overview of the entire roll surface may be established while the roller crusher is still in use.

The method may further comprise the steps of detecting a rotational position of the roll, and associating a detected rotational position with a captured image of a portion of the surface. Thus, an exact portion of the roll surface can be pointed out in the image and used in the determining of information about the surface.

The method may further comprise the step of storing a predetermined representation of the roll surface. The predetermined representation illustrates the roll surface when in an idle working condition. At this time no wear of the roller surface has been established. As mentioned above, the predetermined representation may instead illustrate the roll surface when the roll has been reconditioned, or when the roll has been used for a shorter period after being completely new or reconditioned.

The method may further comprise the steps of storing a plurality of captured images of the roll surface, captured at different rotational positions of the roll, and forming a current representation of the roll surface using the captured images. By using the current representation, the current working condition of the roll surface may be established.

The method may further comprise the step of comparing the current representation of the roll surface with the predetermined representation of the roll surface. By comparing the current representation of the roll surface with the predetermined representation of the roll surface, it may be established if there is a need for reconditioning of the roll surface. For example, a missing stud or a worn down stud that needs replacement may be detected by comparing the images. A vast number of different parameters may be used in order to compare the image illustrating the predetermined representation of the roll surface and the image illustrating the current representation of the roll surface. Such parameters may for example be constituted by a distance, a brightness, a colour, or a temperature. Therefore, the method may further comprise the step of determining at least one from the group consisting of an offset of a first point on the roll surface from a reference point, a brightness of a first point on the roll surface, a colour of a first point on the roll surface, and a temperature of a point on the roll surface. As discussed above, the offset of the first point from the reference point may be a height of that first point above a level of the surrounding roll surface. The reference point will generally be a point in the image corresponding to the level of the surrounding roll surface. Thus, when the roll is completely new and unused, the reference point may be a point on the surface of the roll body, whereas when the roll has been used, and an autogenous layer has formed on the surface of the roll body, between the pins, the reference point may be a point on the surface of the autogenous layer.

According to a sixth aspect of the invention, a computer program is provided. The computer program comprises program code means adapted to execute the method according to the features above when the program is run on a computer or on a processor.

Generally, all terms used in the claims are to be interpreted according to their ordinary meaning in the technical field, unless explicitly defined otherwise herein. All references to "a/an/the [element, device, component, means, etc]" are to be interpreted openly as referring to at least one instance of said element, device, component, means, etc., unless explicitly stated otherwise. The steps of any method disclosed herein do not have to be performed in the exact order disclosed, unless explicitly stated.

As used herein, the term "comprising" and variations of that term are not intended to exclude other additives, components, integers or steps.

By the term "monitoring device" an entire monitoring system is meant. That is to say, the monitoring device includes at least a light emitter, an image capturing device and a processor unit. The monitoring device may further comprise a rotation detector and a memory. It should also be noted that the parts included in the monitoring device may be provided in one unitary device, or separated from each other and in different locations.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a perspective view of a roll of a roller crusher according to prior art, and
Fig. 2 is a perspective view of the roll of Fig. 1 when provided with a monitoring device according to one exemplary embodiment of the present invention.

### Detailed description of preferred embodiments of the invention

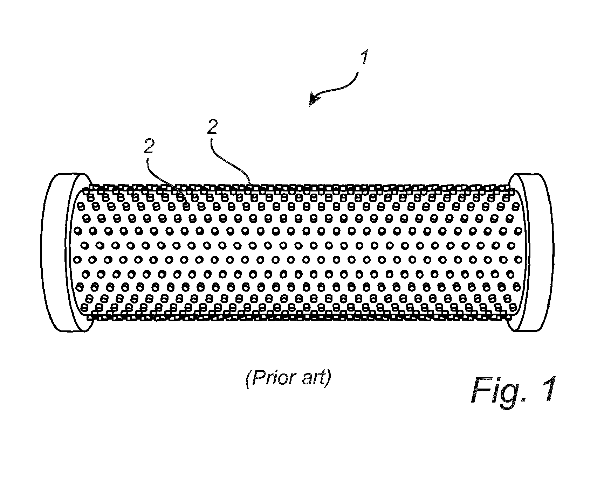

Fig. 1 illustrates a roll 1 of a roller crusher (not shown) according to known prior art. The roll 1 has a plurality of wear resistant pins 2. The wear resistant pins 2, which have a long potential service life even under the action of high compressive loads, have a radially inner pin part which is securely attached to the roll or roll tire.

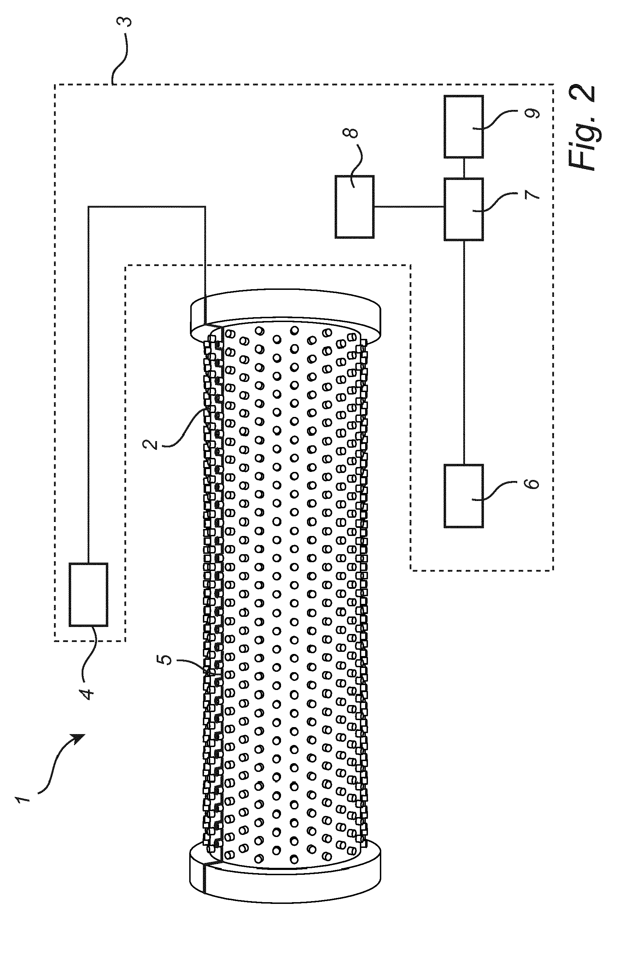

Fig. 2 illustrates the roll 1 of Fig. 1 when provided with a monitoring device 3 for monitoring a surface of the roll 1 according to one exemplary embodiment of the present invention. The monitoring device 3 comprises a light emitter 4 arranged to project a line 5 on the surface of the roll 1, an image capturing device 6 arranged to capture an image of a portion of the surface of the roll 1, the portion including at least a part of the projected line 5, and a processor unit 7 arranged to process the image to determine information about the surface. The monitoring device 3 also has a rotation detector 8 arranged to detect a rotational position of the roll 1, and a memory 9 for storing a predetermined representation of the surface of the roll 1. The predetermined representation illustrates the surface of the roll 1 when in an idle working condition.

In one preferred embodiment of the present invention, the monitoring device 3 will function in the following way when the surface of the roll 1 is to be inspected. The image capturing device 6 will capture images of the roll 1, while the roll 1 is rotating one revolution. Simultaneously, the rotation detector 8 will detect the rotational positions of the roll 1. The processing unit 7 will then associate a detected rotational position of the roll 1 with each image captured by the image capturing device 6. The images of the surface of the roll 1, captured at different rotational positions of the roll 1, will then be formed into a current representation of the surface of the roll 1. The current representation will represent the current working condition of the surface of the roll 1. As a final step, the processing unit 7 will compare the current representation of the surface of the roll 1 with the predetermined representation of the surface of the roll 1 in order to determine the necessary information about the surface of the roll 1. The information about the surface is, for example, used to detect defect or missing wear resistant pins, detect defect or missing edge blocks, detect defect or missing flanges, and/or yield a surface profile to help determine general wear of the roll 1. More specifically, the comparison between the current representation and the predetermined representation is conducted by the processing unit 7, which calculates an offset of a first point on the roll surface from a reference point in each one of the two representations. If the offsets measured from the two representations differ from each other when compared, the surface of the roll 1 has been worn. That process can then be repeated until the entire surface of the roll 1 is covered. It should be noted that measurements regarding the diameter of the roll 1 as well as the surface of the roll 1 can be calculated in a vast number of ways by using the representations. Additionally, other ways to identify defects on the surface of the roll 1 are possible, such as, for example, by examining the geometry of the rolls 1 using the representations.

When both rolls of a roller crusher are monitored, the data concerning the two different rolls can be compared in order to determine necessary information about the roller crusher.

The processing unit may be set to generate an alarm when a predetermined percentage of wear of the roll surface has been detected. When the monitoring device is used for detecting missing pins, the processing unit may be set to generate an alarm as soon as one missing or defect pin has been detected, or when a predetermined number of missing or defect pins have been detected. Further, when an alarm is generated, the processing unit may be arranged to emit an alarm sound, display an alarm message, or even to automatically shut the roller crusher down.

The method described above may be implemented using a computer program comprising program code means adapted to execute the method of when the program is run on a computer or on a processor.

The skilled person realizes that a number of modifications of the embodiments described herein are possible without departing from the scope of the invention, which is defined in the appended claims.

For instance, the analysis of the surface of the roll 1 can be conducted by comparing the brightness, colour or temperature of the current and the predetermined representations. The brightness, colour or temperature of the studs will generally differ from the brightness, colour or temperature of the roll body, and of the autogenous layer created by crushed material between the studs.

In the embodiment described above, the light emitter is a laser. However, other light emitters, emitting other types of light may also be used. For instance, a light emitter emitting light that is not visible to the human eye, i.e. infrared or ultraviolet light, may be emitted, provided that the image capturing device is sensitive to that particular light.

The rotation detector may, for instance be an encoder, but could also be means arranged to measure or input the rotational speed of the roll, and to combine this with a location of a reference point on the roll.

The predetermined representation of the roll surface may be created by inputting coordinates of the studs present in the unused roll into the processing unit, thereby creating a map of the roll surface. It would also be possible to create the predetermined representation of the roll surface by capturing images of the roll surface while rotating the roll, and forming a map of the roll surface, in essentially the same way as the current representation of the roll surface is formed. It would also be possible to combine these approaches, such that images of the unused roll surface are captured and compiled into an image of the entire roll surface, and in that image marking the pins by imputing the coordinates of the pins into the processing unit. In this manner, the system may be trained to recognize the pins in an image.

The line may be projected onto the roll surface from different locations and in different directions, not necessarily parallel with a longitudinal axis of the roll. The line projected on the surface of the roll by the light emitter need not be in the form of a straight line. In order to analyse the images, the line must be well defined for each image.

The monitoring device can be used to monitor the actual roll surface as well as surface elements attached to the roll surface, such as studs, pins, teeth, welded beads, or other elements.

The monitoring device could also comprise a plurality of light emitting devices or one light emitting device projecting a plurality of lines or the like onto the roll surface. If more than one line is projected, they light projecting the respective line may be of the same or different wavelengths.

## Claims

1. A monitoring device (3) a for monitoring a surface of a roll (1) of a roller crusher, comprising
a light emitter (4) arranged to project a line (5) on the surface of said roll (1),
an image capturing device (6) arranged to capture an image of a portion of said surface, said portion including at least a part of said projected line (5), and
a processor unit (7) arranged to process said image to determine information about said surface.

2. A monitoring device (3) as claimed in claim 1, wherein said light emitter (4) is a laser.

3. A monitoring device (3) as claimed in claim 1 or 2, wherein said image capturing device (6) is a camera sensor.

4. A monitoring device (3) as claimed in any one of the preceding claims, wherein said information about said surface is used to detect defect or missing wear resistant pins, detect defect or missing edge blocks, and/or detect defect or missing flanges.

5. A monitoring device (3) as claimed in any one of the preceding claims, wherein said information about said surface is used to yield a surface profile to help determine wear.

6. A monitoring device (3) as claimed in any one of the preceding claims, wherein said image capturing device (6) is arranged to capture images of said roll (1), while said roll (1) is rotating, said image capturing device (6) being arranged to capture a plurality of images of said surface during one revolution of said roll (1).

7. A monitoring device (3) as claimed in claim 5, further comprising a rotation detector (8) arranged to detect a rotational position of said roll (1).

8. A monitoring device (3) as claimed in claim 6, wherein said processing unit (7) is arranged to associate a detected rotational position with an image captured by the image capturing device (6).

9. A monitoring device (3) as claimed in claim 6 or 7, further comprising a memory (9) for storing a predetermined representation of said roll surface.

10. A monitoring device (3) as claimed in claim 8, wherein said processing unit (7) is arranged to store a plurality of captured images of said roll surface, captured at different rotational positions of said roll (1), and to form a current representation of said roll surface using said captured images.

11. A monitoring device (3) as claimed in claim 9, wherein said processing unit (7) is arranged to compare said current representation of said roll surface with said predetermined representation of said roll surface.

12. A monitoring device (3) as claimed in any one of the preceding claims, wherein said processing unit (7) is arranged to determine at least one from the group consisting of an offset of a first point on said roll surface from a reference point, a brightness of a first point on said roll surface, a colour of a first point on said roll surface, and a temperature of a point on the roll surface.

13. A high pressure roller crusher comprising two rolls (1), and at least one monitoring device (3) as claimed in any one of claims 1-12.

14. A sizer comprising two rolls, and at least one monitoring device (3) as claimed in any one of claims 1-12.

15. Use of a monitoring device (3) as claimed in any one of claims 1-12 for determining wear of a surface of a roll (1) of a roller crusher.

16. Use of a monitoring device (3) as claimed in any one of claims 1-12 for determining an absence of a wear body (2) at a location on a surface of a roll (1) of a roller crusher in which a presence of a wear body (2) is intended.

17. A method for monitoring a surface of a roll of a roller crusher, said method comprising the steps of
projecting a line of light on the surface of said roll,
capturing an image of a portion of said surface, said portion including at least a part of said projected line,
processing said image to determine information about said surface.

18. A computer program, comprising program code means adapted to execute the method of claim 15 when the program is run on a computer or on a processor.
